# EUROPÄISCHE PATENTSCHRIFT

(11) **EP 2 219 916 B1**
(45) Veröffentlichungstag und Bekanntmachung des Hinweises auf die Patenterteilung: **06.01.2016**
(21) Anmeldenummer: 08855995.0
(22) Anmeldetag: 03.11.2008
(51) Int. Cl.: B60T 11/22, B60T 11/26, B60T 13/14, B60T 17/06, B60T 17/22

(54) **ELASTISCHE LAGERUNG EINES FLÜSSIGKEITSBEHÄLTERS**
ELASTIC BEARING FOR A FLUID TANK
MONTAGE ÉLASTIQUE D'UN RÉSERVOIR DE LIQUIDE

(30) Priorität: 06.12.2007 DE 102007058782
(43) Veröffentlichungstag der Anmeldung: 25.08.2010
(73) Patentinhaber: Bayerische Motoren Werke Aktiengesellschaft, 80809 München (DE)
(72) Erfinder: MUSEKAMP, Ulf, 80799 München (DE); DECKER, Hubert, 84097 Herrngiersdorf (DE)
(86) Internationale Anmeldenummer: PCT/EP2008/009241
(87) Internationale Veröffentlichungsnummer: WO 2009/071160

(56) Entgegenhaltungen:
- EP-A- 0 372 909
- EP-A- 1 792 798
- WO-A-02/053437
- DE-A1- 10 339 510

## Beschreibung

Die Erfindung bezieht sich auf eine elastische Lagerung eines Flüssigkeitsbehälters an einem Fahrzeug, wie sie im Oberbegriff des Hauptanspruchs beschrieben ist.

Solche Flüssigkeitsbehälter können bspw. als Ausgleichsbehälter für die Bremsflüssigkeit einer hydraulisch betätigten Fahrzeugbremse oder aber auch für die Betätigungsflüssigkeit einer Fahrzeugkupplung dienen. Durch die im Fahrbetrieb auftretenden Vibrationen schwappt je nach Lagerung die Flüssigkeit in dem Behälter mehr oder weniger stark hin und her und - falls Luft hinzutritt - schäumt sie auf. Die damit verbundenen Lufteinschlüsse, die in den Betätigungskreislauf gelangen, können die Funktion des Betätigungsorgans in nicht unerheblicher Weise beeinträchtigen. Dies kann am Beispiel einer Fahrzeugbremse problematisch sein.

Die EP 0 372 909 A2 befasst sich mit dem Schutz eine Reedschalters im Bereich eines hydraulischen Behälters. Dabei ist der Reedschalter in einem Gehäuse eingebettet, das durch eine Gummihülse vor den Erschütterungen des Fahrzeugs geschützt ist.

Aufgabe der Erfindung ist es, einen derartigen Flüssigkeitsbehälter so zu lagern, dass er weitgehend von den im Fahrbetrieb auftretenden Vibrationen unbeeinflusst bleibt.

Die Aufgabe wird mit den kennzeichnenden Merkmalen des Hauptanspruchs gelöst. Vorteilhafte Ausgestaltungen ergeben sich aus den Unteransprüchen. Nach der Erfindung ist demnach der Flüssigkeitsbehälter in seinem Schwerpunktsbereich elastisch gelagert. Der Schwerpunkt eines solchen Flüssigkeitsbehälters kann je nach Befüllungsgrad wandern. Im Schwerpunktsbereich heißt daher, das die Lagerung an jedem vom Befüllungsgrad abhängigen Schwerpunktsort erfolgen kann. Am vorteilhaftesten wird der Schwerpunktsort eines mittleren Befüllungsgrad gewählt werden. Die Erfindung löst aber die gestellte Aufgabe auch bei einer Lagerung am Schwerpunktsort des leeren oder vollen Flüssigkeitsbehälters.

Der Schwerpunkt sollte schon aus Montagegründen möglichst weit unten, nach Möglichkeit sogar außerhalb des Flüssigkeitsbehälters liegen. Dies wird erreicht durch entsprechende Behälterformen. Besonders eignen sich hier Maßnahmen am Behälterboden, indem dieser bspw. ein im Verhältnis zu den übrigen Behälterteilen hohes Gewicht hat oder indem er zusätzlich mit Gewichten verbunden wird. Solche Gewichte können gleichzeitig durch ihre Trägheitsmasse und in Verbindung mit der elastischen Lagerung des Weiteren als Schwingungstilger dienen.

Die erfindungsgemäße elastische Lagerung eignet sich besonders gut für einen Ausgleichsbehälter einer hydraulischen Motorrad-Bremsanlage. Der Ausgleichsbehälter sitzt bei solchen Fahrzeug auf der Lenkstange und ist hier besonders stark den Fahrzeugvibrationen ausgesetzt. Als Motorrad soll hier nicht nur ein zweirädriges Motorrad verstanden werden, auch bei drei- oder vierrädrige motorradähnliche Fahrzeuge lässt sich die erfindungsgemäße Lagerung anwenden.

Beim Flüssigkeitsbehältern auf der Lenkstange ist die elastische Lagerung besonders der Verschmutzung ausgesetzt. Bei einer vorteilhaften Ausgestaltung der Erfindung überdeckt eine Hülse, die am Boden des Flüssigkeitsbehälters angebracht sein kann, die Lagerstelle. Eine solche Hülse kann darüber hinaus auch noch durch eine entsprechende optische Ausgestaltung als gefälliger Sichtschutz für die Lagerung dienen. Schließlich lässt sich die Hülse durch entsprechende Ausgestaltung und zusammen mit Befestigungsteilen der Lagerung als Verdrehsicherung auslegen.

Weitere vorteilhafte Ausgestaltungen der Erfindung ergeben sich aus der nachfolgenden Beschreibung mehrerer Ausführungsbeispiele und anhand der dazugehörenden Zeichnung. Es zeigen
- Fig. 1: in perspektivischer Darstellung einen Flüssigkeitsbehälter mit einer ersten Ausführung der erfindungsgemäßen Lagerung,
- Fig. 2: abschnittsweise und in vergrößertem Maßstab den Bodenbereich eines Flüssigkeitsbehälters mit einer zweiten Ausführung der Lagerung,
- Fig. 3: eine vergleichbare Darstellung des Bodenbereichs mit einer dritten Ausführung der Lagerung und
- Fig. 4: wiederum den Bodenbereich eines Flüssigkeitsbehälters mit einer vierten Ausführung der Lagerung.

Funktionell gleichwirkende Teile der einzelnen Figuren sind in der nachfolgenden Beschreibung weitgehend mit den gleichen Bezugsziffern versehen.

Ein Flüssigkeitsbehälter 1 bildet den Ausgleichsbehälter für die Bremsflüssigkeit einer nicht näher dargestellten hydraulischen Bremsanlage eines Motorrades. Der Flüssigkeitsbehälter 1 ist dabei auf einer nur symbolisch angedeuteten Lenkstange 2 des Motorrades elastisch gelagert, wie dies nachfolgend genauer beschrieben wird.

Für diese Lagerung weist der Flüssigkeitsbehälter 1 an seinem Bodenbereich 1 a eine radial abstehende Lasche 3 auf, die mit einem schräg nach unten verlaufenden Bügel 4 fest verbunden ist, bspw. durch Verschrauben. Das von der Lasche 3 wegweisende Ende 4a des Bügels 4 ist als Befestigungsauge ausgelegt und nimmt einen nach unten ragenden Bolzen 5 auf, der an seinem gegenüberliegenden Ende eine Tilgermasse 6 trägt, die bspw. aus einem Metallblock gebildet sein kann. Zwischen dem Befestigungsauge und der Tilgermasse 6 ist über den Schaft des Bolzens ein als elastisches Lager dienender Gummiblock 7 geschoben. Der Gummiblock wird außen umfasst vom Ende eines streifenförmigen Trägerelements 8, dessen gegenüberliegendes Ende an der Lenkstange befestigt ist. Schließlich sei noch erwähnt, dass eine angedeutete Leitung 9 für den Zu- bzw. Abfluss der Bremsflüssigkeit dient.

Die elastische Anbindung des Flüssigkeitsbehälter 1 erfolgt im Bereich seines Schwerpunkts, genauer in dem Schwerpunkt, der sich aus dem eigentlichem Behälter 1 mit seiner Füllung, abstehender Lasche 3, damit verbundenem Bügel 4, Bolzen mit Gummiblock 7 und Tilgermasse 6 ergibt. Der Schwerpunkt befindet sich dabei im Abschnitt des Gummiblocks 7, der von dem Trägerelement 8 umfasst wird. Vibrationen, die über die Lenkstange 2 und das Trägerelement 8 in den Gummiblock 7 eingeleitet werden, werden durch diese Schwerpunktslagerung nicht und nur unmerklich an den Flüssigkeitsbehälter weitergeben. Dabei unterstützt die Tilgermasse 6 mit seiner Trägheitsmasse die Schwingungsdämpfung.

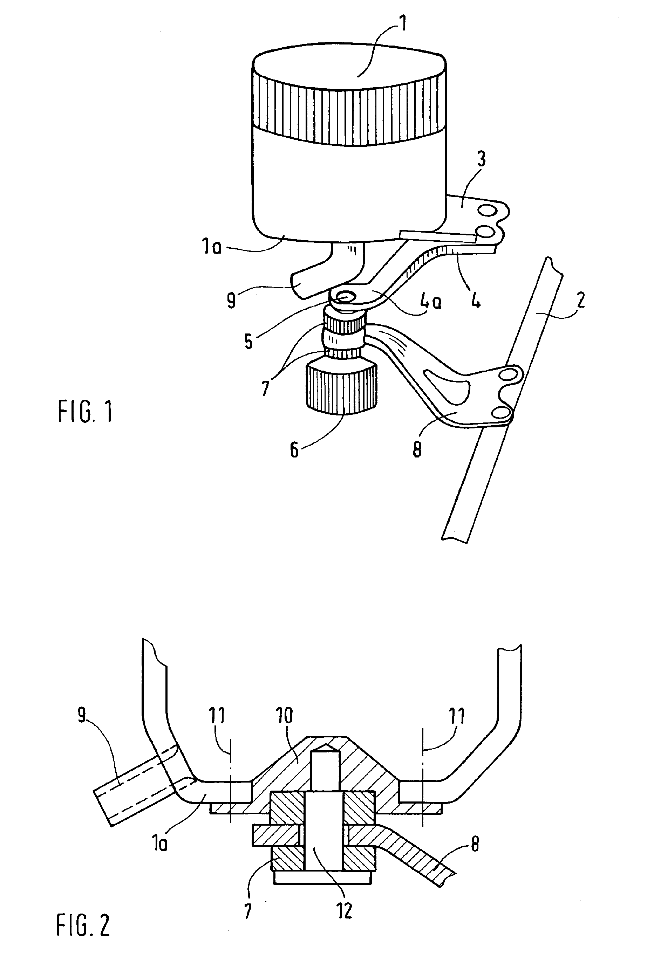

Das Ausführungsbeispiel nach Fig. 2 zeigt schematisch lediglich den Bodenbereich 1 a eines nicht weiter bezifferten Flüssigkeitsbehälters. Es ist wieder die Leitung 9 für die Bremsflüssigkeit erkennbar. In seinem Mittenbereich ist in den Bodenbereich 1a ein scheibenförmiges, im Mittenbereich stark verdicktes Bauelement 10 eingelassen. Das Bauelement 10 ist am Bodenbereich 1 a befestigt, bspw. über eine Schraubverbindung, wie dies die strickpunktierten Linien 11 andeuten sollen. Das Bauelement 10 weist eine Gewindebohrung auf, in die ein mit einem Schaft versehener Gewindebolzen 12 eingeschraubt ist. Über den Schaft ist wiederum ein als elastisches Lager dienender Gummiblock 7 geschoben, der wie im ersten Ausführungsbeispiel von einem angedeuteten Trägerelement 8 außen umfasst wird. Hierfür weist der Gummiblock 7 eine umlaufende äußere Nut auf, in die das Ende des Trägerelements 8 eingreift.

Schließlich endet der Gewindebolzen 12 an seiner dem Gewinde abgewandten Seite in einem tellerartigen Kopf, der als Auflage für den Gummiblock 7 dient. Der eingeschraubte Gewindebolzen 12 drückt den Gummiblock 7 dadurch gegen ein entsprechend geformtes Widerlager des Bauelements 10 und verspannt somit den ganzen Aufbau. Der Gummiblock 7 befindet sich wiederum im Schwerpunktsbereich des Flüssigkeitsbehälters.

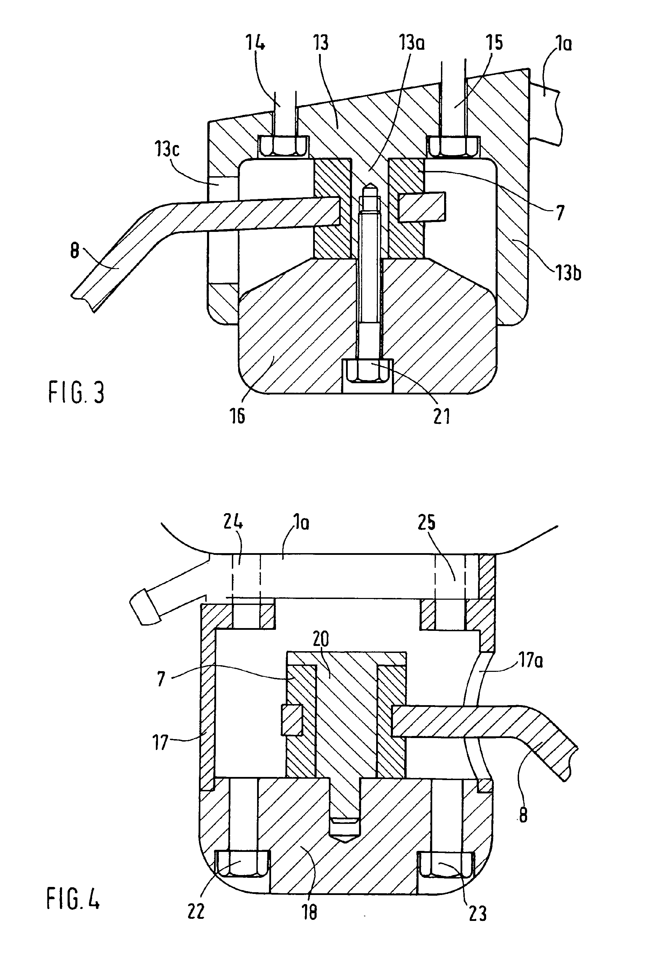

Auch bei der dritten Ausführungsform nach Fig. 3 ist lediglich der Bodenbereich 1 a eines Flüssigkeitsbehälters angedeutet. Der Bodenbereich 1 a trägt ein hülsenförmiges Bauteil 13, das mit Schrauben 14 und 15 am ihm befestigt ist. Etwa in seinem Zentrum ist an dem Bauteil 13 einen nach unten ragenden Zapfen 13a mit einem Innengewinde angeformt. Die Hülsenwand 13b des Bauteils 13 zeigt ebenfalls nach unten und sie umgreift mit ihrem offenen Ende eine Tilgermasse 16, die wiederum über eine Schraube 21 und unter Zwischenschaltung eines Gummiblocks 7 am Zapfen 13a festgelegt ist. Der Gummiblock 7 ist dabei auf den Zapfen 13a aufgeschoben und im montierten Zustand zwischen Tilgermasse16 und Innenboden des Bauteils 13 verspannt. Ein Trägerelement 8 greift durch die Hülsenwand 13b des Bauteils 13 und umfasst in vorgeschriebener Weise den Gummiblock 7. Für den Durchgriff des Trägerelements 8 sieht die Hülsenwand 13b eine Öffnung 13c vor, die so dimensioniert ist, dass die Hülsenwand 13b zusammen mit dem Trägerelement 8 eine Verdrehsicherung bilden.

Insgesamt schützt die Hülsenwand 13b den Gummiblock 7 und damit die elastische Lagerung vor Verschmutzung und dient zugleich noch als Sichtschutz.

Nach Fig. 4 ist am Bodenbereich 1 a eines Flüssigkeitsbehälters wiederum ein hülsenartiges Bauteil 17 befestigt. Am gegenüberliegenden Ende dieses Bauteils 17 ist eine Tilgermasse 18 eingepasst, in deren Zentrum ein nach oben zeigender Stehbolzen 20 eingeschraubt ist. Der Stehbolzen weist im Wesentlichen die gleiche Form auf wie der Stehbolzen 12 nach Fig. 2 und hat auch die gleiche Funktion, nämlich die Aufnahme eines Gummiblockes 7, der wiederum von einem Trägerelement 8 umfasst wird. Das Trägerelement 8 greift ebenfalls über eine als Verdrehsicherung wirkende Öffnung 17a durch die Seitenwand des hülsenförmigen Bauteils 17.

Schrauben 22, 23 sind durch die Tilgermasse 18 hindurchgeführt und greifen in Gewindelöcher 24, 25 des Bodenbereichs 1a. Dadurch wird das Bauteil 17 zwischen der Tilgermasse 18 und dem Bodenbereich 1 a verspannt.

## Patentansprüche

1. Elastische Lagerung eines Flüssigkeitsbehälters (1) an der Lenkstange (2) eines Motorrades mit einem Trägerelement (8), das mit einem ersten Abschnitt an einem aufbaufesten Teil des Fahrzeugs festgelegt ist und mit einem zweiten Abschnitt über ein elastisches Bauteil den Flüssigkeitsbehälter (1) trägt, **dadurch gekennzeichnet, dass** die Anbindung des Flüssigkeitsbehälters (1) am zweiten Abschnitt des Trägerelements (8) im Schwerpunktsbereich des Flüssigkeitsbehälters (1) liegt.

2. Elastische Lagerung nach Anspruch 1, **dadurch gekennzeichnet, dass** der Flüssigkeitsbehälter (1) ein nach unten zeigender Befestigungsabschnitt aufweist, an dem der zweite Abschnitt des Trägerelements (8) angebunden ist.

3. Elastische Lagerung nach Anspruch 2, **dadurch gekennzeichnet, dass** der Befestigungsabschnitt in einen über die Anbindungsstelle des Trägerelements hinaus nach unten verlängerten Fortsatz übergeht und an dem Fortsatz eine Tilgermasse (6, 16, 18) vorgesehen ist.

4. Elastische Lagerung nach einem der Ansprüche 2 oder 3, **dadurch gekennzeichnet, dass** die Anschlussstelle des Trägerelements durch eine am Flüssigkeitsbehälter (1) befestigte Hülse (13, 17) geschützt ist.

5. Elastische Lagerung nach Anspruch 4, **dadurch gekennzeichnet, dass** die Hülse (13, 17) eine Aussparung (13c, 17a) für den Durchtritt des Trägerelements (8) aufweist, und die Aussparung (13c, 17a) als Verdrehsicherung dient.

6. Elastische Lagerung nach einem der Ansprüche 2 bis 5, **dadurch gekennzeichnet, dass** der Befestigungsabschnitt als Bügel (4) ausgelegt ist, der mit einem Ende an einer am Boden des Flüssigkeitsbehälters (1) radial abstehenden Lasche (3) festgelegt ist und dessen anderes Ende über eine Bolzenverbindung (5) und unter Zwischenschaltung eines als elastisches Lager dienenden Gummiblocks (7) mit dem Trägerelement (8) verbunden ist.

7. Elastische Lagerung nach einem der Ansprüche 2 bis 5, **dadurch gekennzeichnet, dass** im Boden (1a) des Flüssigkeitsbehälters ein Gewindebolzen (12) eingeschraubt ist, über dessen Schaft ein als elastisches Lager dienender Gummiblock (7) geschoben ist und dass das Trägerelement (8) den Gummiblock (7) außen umfasst.

8. Elastische Lagerung nach Anspruch 2 bis 6, **dadurch gekennzeichnet, dass** am Boden (1 a) des Flüssigkeitsbehälters ein hülsenförmiges Bauteil (13) befestigt und ein nach unten ragender Zapfen (13a) angeformt ist, über den ein als elastisches Lager dienender Gummiblock (7) geschoben ist, der vom Trägerelement (8) außen umfasst wird und von einen in den Zapfen (13a) eingeschraubten Gewindebolzen (21) fixiert ist.

9. Elastische Lagerungen nach Anspruch 8, **dadurch gekennzeichnet, dass** der Gewindebolzen (21) eine unterhalb des Gummiblocks (7) angeordnete Tilgermasse (16) trägt und dass die Hülsenwand (13b) die Tilgermasse (16) umfasst.

10. Elastische Lagerung nach einem der Ansprüche 2 bis 6, **dadurch gekennzeichnet, dass** am Boden (1a) ein hülsenartiges Bauteil (17) für den Schutz der Anschlussstelle des Trägers (8) am Flüssigkeitsbehälter (1) angeschraubt ist und an ihrem gegenüberliegenden Ende ein als Schwingungstilger dienenden Tilgermasse (18) trägt, und dass der als elastisches Lager dienender und von dem Träger außen umfasster Gummiblock (7) innerhalb des Bauteils (17) mit der Tilgermasse (18) verschraubt ist.

11. Elastische Lagerung nach einem der Ansprüche 1 bis 10 für einen Ausgleichsbehälter für das Betätigungsfluid einer Fahrzeugbrems- oder Kupplungsanlage.

## Claims

1. A resilient bearing for a liquid container (1) on the handlebar (2) of a motorcycle, comprising a bearing element (8), a first part of which is fastened to a part of the vehicle fixed to the body and a second part of which bears the liquid container (1) via a resilient component, **characterised in that** the liquid container (1) is attached to the second part of the bearing element (8) near the centre of gravity of the liquid container (1).

2. A resilient bearing according to claim 1, **characterised in that** the liquid container (1) has a downwardly pointing fastening part connected to the second part of the bearing element (8).

3. A resilient bearing according to claim 2, **characterised in that** the fastening part merges into a prolongation extending downwards via the place where the bearing element is attached, and has an absorption mass (6, 16, 18) on the prolongation.

4. A resilient bearing according to claim 2 or claim 3, **characterised in that** the place where the bearing element is connected is protected by a sleeve (13, 17) fastened to the liquid container (1).

5. A resilient bearing according to claim 4, **characterised in that** the sleeve (13, 17) has a recess (13c, 17a) for inserting the bearing element (8), and the recess (13c, 17a) prevents twisting.

6. A resilient bearing according to any of claims 2 to 5, **characterised in that** the fastening part is curved (4), and one end of it is fastened to a radially projecting lug (3)at the bottom of the liquid container (1) and the other end is connected to the bearing element (8) via a bolt (5), with interposition of an elastics material bearing in the form of a rubber block (7).

7. A resilient bearing according to claims 2 to 5, **characterised in that** a threaded bolt (12) is screwed in the end (1 a) of the liquid container, a resilient bearing in the form of a rubber block (7) is slid over the bolt shank, and the bearing element (8) surrounds the rubber block (7).

8. A resilient bearing according to claims 2 to 6, **characterised in that** a sleeve-like component (13) is fastened to the end (1a) of the liquid container and a downwardly projecting nozzle (13a) is integrally formed thereon and a resilient bearing in the form of a rubber block (7) is slid over it and is externally surrounded by the bearing element (8) and is fixed by a threaded bolt (21) screwed into the nozzle (13a).

9. A resilient bearing according to claim 8, **characterised in that** the threaded bolt (21) bears an absorption mass (16) disposed under the rubber block (7) and the sleeve wall (13b) surrounds the absorption mass (16).

10. A resilient bearing according to any of claims 2 to 6, **characterised in that** a sleeve-like component (17) for protecting the place where the bearer (8) is connected to the liquid container (1) is screwed to the end (1 a) and its opposite end bears a vibration damper in the form of an absorption mass (18) and the elastics material bearing in the form of a rubber block (7) surrounded by the bearer is screwed to the absorption mass (18) inside the component (17).

11. A resilient bearing according to any of claims 1 to 10 for a balancing container for the fluid actuating a brake or clutch system.

## Revendications

1. Montage élastique d'un réservoir de liquide (1) sur la colonne de direction (2) d'une moto comportant un élément de support (8) fixé par un premier segment à une pièce solidaire du châssis du véhicule et avec un second segment il porte le réservoir (1) par l'intermédiaire d'un composant élastique,
**caractérisé en ce que**
la liaison du réservoir à liquide (1) au second segment de l'élément de support (8) se situe dans la région du centre de gravité du réservoir (1).

2. Montage selon la revendication 1,
**caractérisé en ce que**
le réservoir (1) comporte un segment de fixation tourné vers le bas et auquel est relié le second segment de l'élément de support (8).

3. Montage selon la revendication 2,
**caractérisé en ce que**
le segment de fixation comporte un prolongement vers le bas au-delà du point de liaison de l'élément de support et ce prolongement porte une masse d'amortissement (6, 16, 18).

4. Montage selon l'une des revendications 2 ou 3,
**caractérisé en ce que**
le point de raccordement de l'élément de support est protégé par un manchon (13, 17) du réservoir (1).

5. Montage selon la revendication 4,
**caractérisé en ce que**
le manchon (13, 17) comporte un évidement (13c, 17a) pour le passage de l'élément de support (8) et l'évidement (13c, 17a) constitue un blocage en rotation.

6. Montage selon l'une des revendications 2 à 5,
**caractérisé en ce que**
le segment de fixation est conçu comme un étrier (4) dont une extrémité est fixée à une patte (3) radialement en saillie du fond du réservoir de liquide (1) et dont l'autre extrémité est reliée par une liaison vissée (5) et avec interposition d'un bloc en caoutchouc (7) servant de palier élastique à l'élément de support (8).

7. Montage selon l'une des revendications 2 à 5,
**caractérisé en ce qu'**
une vis (12) est vissée dans le fond (1a) du réservoir, un bloc en caoutchouc (7) servant de palier élastique étant emmanché sur le corps de la vis et l'élément de support (8) entoure le bloc en caoutchouc (7).

8. Montage selon l'une des revendications 2 à 6,
**caractérisé en ce qu'**
une pièce (13) en forme de manchon est fixée au fond (1a) du réservoir de liquide et comporte un tenon (13a) en saillie vers le bas sur lequel est glissé un bloc en caoutchouc (7) servant de palier élastique pour être entouré par l'élément de support (8) et être bloqué par un goujon fileté (21) vissé dans le tenon (13a).

9. Montage selon la revendication 8,
**caractérisé en ce que**
la vis (21) porte une masse d'amortissement (16) située en-dessous du bloc en caoutchouc (7) et la paroi de manchon (13b) entoure la masse d'amortissement (16).

10. Montage selon l'une des revendications 2 à 6,
**caractérisé en ce qu'**
un composant en forme de manchon (17) pour protéger le point de raccordement du support (8) au réservoir de liquide (1) est vissé au fond (1a) et son extrémité opposée porte une masse d'amortissement (18) pour amortir des vibrations et le bloc en caoutchouc (7) servant de palier élastique entouré extérieurement par le support est vissé dans le composant (17) avec la masse d'amortissement (18).

11. Montage selon l'une des revendications 1 à 10,
pour un réservoir du liquide d'actionnement d'une installation de freins de véhicule ou une installation d'embrayage.
